# EUROPEAN PATENT SPECIFICATION

(11) **EP 2 351 370 B1**
(45) Date of publication and mention of the grant of the patent: **18.03.2020**
(21) Application number: 09749248.2
(22) Date of filing: 22.10.2009
(51) Int. Cl.: H04N 21/462, H04N 7/173, H04N 21/4722, H04N 21/61, H04N 21/858

(54) **SYSTEMS AND METHODS FOR PROVIDING A NETWORK LINK BETWEEN BROADCAST CONTENT AND CONTENT LOCATED ON A COMPUTER NETWORK**
SYSTEME UND VERFAHREN ZUR BEREITSTELLUNG EINER NETZWERKVERBINDUNG ZWISCHEN BROADCAST-INHALT UND IN EINEM COMPUTERNETZWERK BEFINDLICHEM INHALT
SYSTÈMES ET PROCÉDÉS DE FOURNITURE D'UN LIEN RÉSEAU ENTRE UN CONTENU DIFFUSÉ ET UN CONTENU SITUÉ SUR UN RÉSEAU INFORMATIQUE

(30) Priority: 22.10.2008 US 288672
(43) Date of publication of application: 03.08.2011
(73) Proprietor: Rakuten, Inc., Tokyo 158-0094 (JP)
(72) Inventor: KOKERNAK, Michael, Boston MA 02111 (US); NOLAND, Madeleine, Quincy MA 02171 (US); CAMPBELL, Colin, Norwood MA 02062 (US); BECHTEL, Gordon, Newburyport MA 01950 (US)
(74) Representative: Hoffmann Eitle
(86) International application number: PCT/US2009/061648
(87) International publication number: WO 2010/048382

(56) References cited:
- WO-A-2009/075745
- US-A1- 2002 078 446
- US-A1- 2007 157 251
- PENTON MEDIA, INC.: "Interactivity takes major step for broadcaster" INTERNET CITATION, [Online] 26 August 2008 (2008-08-26), pages 1-4, XP002568030 Retrieved from the Internet: URL:http://broadcastengineering.com/news/i nteractivity-major-step-broadcasters-0826/ > [retrieved on 2010-02-08]
- ANONYMOUS: "Media Object Server (MOS) Protocol v2.6" INTERNET ARTICLE, [Online] 9 August 2001 (2001-08-09), pages 1-87, XP002568031 Retrieved from the Internet: URL:http://www.mosprotocol.com/MOS%20Files /mosv26.htm#mosObj> [retrieved on 2010-02-08]

## Description

### Cross-Reference to Related Applications

This application claims priority to U.S. Patent Application No. 12/288,672, filed October 22, 2008.

### Field of the Invention

The systems and methods described herein generally pertain to data distribution networks and more particularly to data networks that link tracking content residing in different classes of distribution networks.

### Background

Today, there are many different types of data networks, having different topologies and different data functions. Broadcast networks, such as television and radio networks have now switched largely to a digital data network. These networks use an infrastructure suited for storing a relatively small number of extremely large data files that are distributed to a large number of users. Additionally, these networks provide little or no support of a backchannel from the user to the broadcasting server. In contrast, data networks that support data communications between computer and workstations have storage suited for storing an extremely large number of relatively small files and a topology and architecture for routing data quickly between devices on the network, typically providing each computer with an equal share of resources for transmitting data. Of these types of data networks, probably the most well known is the Internet.

The growth of the Internet has been so significant that it has challenged the vitality and significance of the television and radio networks as medium for content delivery. The television network is better suited for broadcast deliveries of television content. However, the Internet provides content that attracts viewers, and at the same time provides a data processing platform that allows the viewer to instantly select content and agree to purchases. A concrete result of the difference between the television and radio network technology and computer data network technology is that, a consumer watching content over the Internet can be presented with an advertisement carrying an interactive link that the user can select like any other web link. Based on that selection, the consumer can buy a product or at least request additional information about the product from the retailer. Many advertisers see this as a better platform. With the Internet data network, an advertiser can simultaneously present both an ad and a mechanism to purchase the product, reaching the consumer while the advertisement is on their mind.

Consequently, the economic future of the television and radio networks as an advertising medium will depend upon joining the those platforms to the Internet platform. Additionally, the value of the television and radio networks as a communication tool would also be increased by a viable network technology that brought the interactivity of a computer data network to the broadcast capabilities of the television network. For example, emergency alerts that are broadcast over the television network may have increased effectiveness if they are combined with an easy way for viewers to request and get more specific information, such as downloadable maps of evacuation routes, information on missing persons and other life saving safety information. To this end, many companies and groups are working on this issue and are developing network technologies that allow for two way communications, including two-way communications over the cable-TV network.

These technologies merely increase the bi-directional communication capabilities of the cable TV platform. However, it is unclear that simply adding improved communication technology will allow the television platform to compete successfully against Internet advertising systems. These systems allow Internet-like advertising, such as linkable content, to be carried over the cable-TV platform. In essence, the proposed systems only extend low quality Internet banner ads and pop-up notices to the TV viewing experience. Thus these proposed solutions fail to address the existing technologies and platforms for developing and distributing advertising content over the television network. Further, these technologies exist only in the cable television environment while programmers, advertisers and safety officials desire a solution that operates in all television distribution environments.

For television and radio systems to compete against the Internet, technology needs to be developed that extends the interactivity and accountability of the Internet to the TV and radio mediums, in a manner that fits with the existing structure of television and radio advertising.

As such there remains a need for systems and methods that provide an improved platform for allowing data content on a computer network to be linked with content on a broadcast network.

"Interactivity takes major step for broadcaster", XP002568030 discloses data stream server that goes into a broadcast facility and inserts token IDs into an MPEG-2 digital stream.

XP002568031 "Media Object Server Protocol v2.6" discloses a protocol for communications between Newsroom Computer Systems and Media Object Servers such as Video Servers, Audio Servers, Still Stores, and Character Generators.

US 2007157251 discloses systems and methods for on demand purchasing of products associated with a television program.

US 2002/0078446 discloses a system and method for adding hyperlinked information to a television broadcast system.

### Summary Of The Invention

The systems and methods described herein pertain, among other things, to a data network system that includes a data stream server that inserts a token into a broadcast media stream at a point in the network where that stream is ready to be delivered to a network node. The token provides a data pointer that links, typically by creating a logical link, the broadcast media stream, or a portion of the broadcast media stream, to content stored on a data network. The network system tracks the broadcast content that is queued, scheduled or otherwise organized to be delivered over the television network. At a selected time, the network system triggers the data stream server to insert into the broadcast stream the token, or optionally, a series of tokens. These tokens in one embodiment are inserted into a transport stream of data packets being broadcast to a series of network nodes. Preferably, the data stream server is located at a point in the network that is subsequent to any processing of the broadcast media stream that may result in the inserted packets being stripped from the broadcast media stream. The inserted tokens may be processed by a television content receiver to create a visual representation of the logical link. The link may be activated to create a request for the associated content that is stored on the data network, and the content may be delivered to a destination associated with the source of the request.

Accordingly, the systems and methods described herein in one aspect, provide a network including systems that link data served on a broadcast network, including broadcast networks employing transport stream data transmission with data maintained on an internet protocol packet switched network.

### Brief Description of the Drawings

The foregoing and other objects and advantages of the invention will be appreciated more fully from the following further description thereof, with reference to the accompanying drawings wherein;
Figure 1: Depicts a first embodiment of one system according to the invention;
Figure 2: Depicts a database with XML representations of token data stream;
Figure 3: Depicts one embodiment of a packet generator;
Figure 4: Presents a flow chart of one process according to the invention;
Figure 5: Depicts a second embodiment of the system according to the invention.

### Description of the Illustrated Embodiments

To provide an overall understanding of the systems and methods described herein, certain illustrative embodiments will now be described, including a system that links content within a broadcast media stream with content on a computer network. The network linking systems and methods described herein provide systems that may link advertising content on a computer data network with television content, or portions of television content, being broadcast over a television network. As such, the content linking system allows a content producer that has produced content for broadcast delivery, such as a television show or a commercial, to link with that broadcast content additional and separate content that is stored on a computer network. However, the systems and methods described herein are not so limited and may be used for other applications, including for example, emergency broadcast notification systems that link emergency broadcasts with content stored on a data network. These and other applications, as well as certain modifications, supplements and additions will be apparent to those of skill in the art from the description set forth below.

To this end and in one exemplary embodiment, the systems and methods described herein integrate a data stream server into a television network by, in one practice, placing the data stream server at a location on a broadcast network that is at the point of content delivery to nodes on the television network The data stream server, in one embodiment, is capable of processing the broadcast data stream to insert into the broadcast data stream information representative of links to the content stored on the computer network. The inserted content is placed within the broadcast data stream at a location or a time that corresponds to the location or the time of the broadcast media to which the system wishes to link the content stored on the computer network. Thus, the inserted content, also referred to as tokens herein, provide a logical link to data stored on, or that can be generated on, a data network.

In one particular embodiment, as will be described in more detail hereinafter, the data stream server generates data packets that may be incorporated into an MPEG-2 transport stream. The MPEG-2 transport stream is the broadcast media content that is being delivered to the televisions on a cable network or to other receivers of broadcast media. So, for example, as the MPEG-2 transport stream that carries a television show is transmitted from the television station, that data server that has the links to the content stored on the computer network integrates into the broadcast stream data packets that comply with the metadata packet format for the MPEG-2 transport stream. The data packets in the metadata stream carry information that can be used by the receivers, typically set top boxes, to present to a viewer both the content that makes up the television show being broadcast and an icon that indicates to the viewer that there is content stored on a computer network that is being associated with or somehow related to the content being viewed in the broadcast. In operation, the viewer will be able to activate a control that inputs information to the set top box, and this information is delivered through the back channel on the cable network up into the cable head end. The information delivered back to the cable head end may include the link information to the computer content associated with the broadcast content and optionally and preferably the identifier of the viewer's set top box. The set top box identifier may be any suitable identifier that will identify the set top box that returned the link information to the cable head end. As such, the set top box identifier provides either directly or indirectly information that may be used by the system to derive a destination network address on the linked packet switched network. Thus, the systems described herein provide to the linking system, sufficient information for the linking system to act as a network gateway to mediate data communications, at least undirectional data communication between two networks employing different data communication protocols. In one particular exemplary embodiment, the link information is used to collect information stored on the computer network and the set top box identifier is employed to deliver that stored computer network information to a portal that the viewer associated with that set top box may later access.

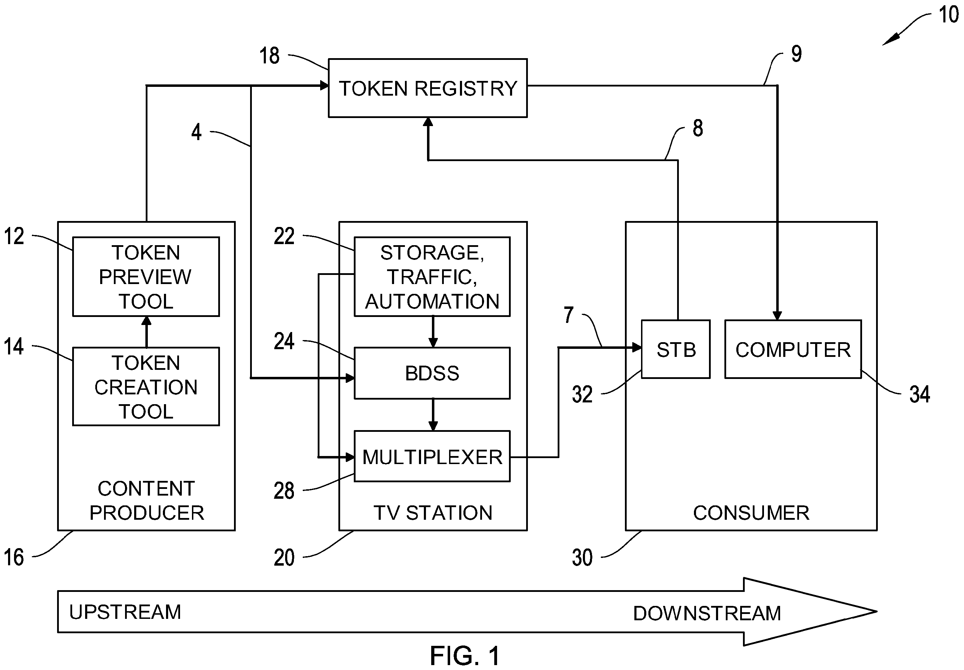

For the purpose of describing the systems and methods, Figure 1 depicts the content linking system 10 as including elements such as the consumer station 30, which in this depiction includes a receiver 32 and computer 34. Similarly, Figure 1 depicts a content producer station 16 and token registry 18. Although these elements may optionally be part of a system for linking broadcast media content, such elements are optional. Further, the configuration and arrangement of these elements may vary from that depicted in Figure 1. For example, the depicted token registry 18 is illustrated as an element separate from the content producer station 16 and separate from the TV station 20. However, in other optional embodiments, the token registry 18 maybe integrated into either the content producer station 16 or the TV station 18. Still other arrangements may be realized, as well as modifications that eliminate or substitute certain of the depicted elements, such as the computer 34 at the consumer station, or the preview tool 12 at the content producer station 16, and the configuration and arrangement selected will depend upon the application being addressed. Figure 1 further depicts that at the consumer station 30 there are nodes on the television network (the receiver 32) and for the computer data network (the computer 34). In typical operation, these networks operate independently from each other. Further, there typically is no gateway that switches data from the broadcast network to a computer data network. The systems and methods described herein provide such a gateway. With the systems described herein, content broadcast over the television network may be linked to content stored on a computer data network, thereby allowing content distributed over the television network to drive delivery of content over the computer data network. A request packet transmitted over the broadcast television network may be passed on to the computer data network.

Turning back to Figure 1, it is shown that content producers at station 16 may develop content for distribution over the television network that they wish to link with content either stored on or generated at a computer data network. To this end, the depicted content production station 16 includes the token preview tool 12 and the token creation tool 14. The content production station 16 may be used by a content producer to review content that will be broadcast from the television station 20 to different consumer stations 30 along the television network. Typically, the content producer is a television producer, or an advertiser that is developing the kind of content that is usually distributed over cable television systems such as entertainment programs, or advertisements. However, any person may be a content producer and the actual person choosing to develop content for delivery over the television network will vary depending on the application and the task at hand. For example, developers of emergency alert data for broadcast over the television network may also develop content using the content producer station 16 for the purpose of linking sections of the emergency broadcast content with data on a computer network. The content developed at station 16 is typically content of the type suited for delivery over a television network and usually will be a very large data file consisting of many hundreds of megabytes of data or many gigabytes of data. Additionally, the intended distribution will be to a large number of sites on the television network, all of which will receive the data at about the same time.

In the embodiment depicted in Figure 1, the content producer station 16 includes a token creation tool 14. As shown in Figure 1, the token creation tool 14 connects to the token registry 18. The token preview tool 12 also connects to the token registry 18. Using common video play-back and non-linear video editing tools, the content producer can watch the television show that they have produced or that has been given to them and they can watch the show as it progresses through its sequence. At one point, the content producer decides to associate with a portion of that television show some additional content that is stored on a computer network. Thus, for example, during a commercial for an automobile, the content producer may decide to associate a portion of the video being presented to the consumers with content stored on a computer network that represents a coupon for getting a certain amount of money off the purchase of an automobile similar or identical to the automobile being shown in the advertisement. In another example, the content producer may decide to provide a series of tokens that are spaced in time across the content. The tokens may be associated with content stored on the computer network that represents the broadcast content. In one application, these temporarily spaced tokens may be employed to create data packets for transmission over the backchannel of the television network that the systems described herein may process to generate data requests that comply with the communication protocol employed by the computer data network. The systems may switch these generated requests on to the computer data network, and thereby link the two different networks. To this end, the content producer at the content production station 16 enters data into the token creation tool 14 about the content, the start time and duration of an icon that represents to the viewer that content on a computer network has been associated with the video sequence, and specifies what the associated computer network content is. Typically, the presentation of this association directs the consumer to enter some input, typically by activating the user's remote control or through some other device, providing a signal to the consumer's set top box that can be processed by the consumer's set top box to deliver through the back channel on the cable network or on any network, information that is representative of the location of the computer content that has been associated by the content producer with the particular visual sequence the content producer identified in the token creation tool 14. The token creation tool 14 generates a request to the token registry 18 which then generates a token and registers the token with the token registry 18 along with the properties of the token that the content producer 16 has specified.

Once the token has been created and stored in the token registry 18, the content producer may use the token preview tool 12 to simulate the presentation to the consumer of the broadcast content combined with the token data, and simulate the presentation to the consumer of the associated computer network content if a consumer were to click on the token. In one embodiment the token creation tool 14 and the token previewer tool 12 are integrated with a non-linear video editor so that the content producer can view the content, enter the token data, and preview the consumer experience within one user interface. In one embodiment the token preview tool 12 can alter the original video/audio content file by adding meta data representative of the token which the data stream server can detect when the content file is playing out during a broadcast.

The token registry 18 includes a database that stores a unique token ID to the content producer as the content producer is using the token creation tool 14 and that token ID is uniquely representative of the video information or other information or content that the content producer wishes to associate with content on a computer network. The token registry 18 depicted in Figure 1 may be a token registry such as that described in U.S. Patent Application No. 12/001,633, entitled "Systems and Methods for Registering Token Data on a Computer Network" and owned by the Assignee hereof.

Figure 1 further depicts a television station 20. The television station includes a multi-part system comprising storage, traffic, and automation systems 22, the data stream server 24, and the multiplexer 28. As shown in Figure 1, the content producer 16 may communicate with the storage traffic automation system 22. In particular, the content producer 16 may load onto the storage traffic automation system 22 the video content, and optionally the desired schedule for broadcasting it, that the content producer wishes to have broadcast by the television station 20 over the television network, which in this example may be a cable network connected to the consumer station 30. In the embodiment depicted in Figure 1, there is a single content producer 16 that is delivering content and schedule information to the storage traffic automation system 22. However, in most applications, there will be a number of content producers each of them producing different kinds of content whether its entertainment content, advertiser content or otherwise, and all this content may be stored separately in different locations within the storage traffic automation system 22.

The storage traffic automation system 22 typically includes a play list or other control system that identifies when content stored in the system 22 is to be transmitted from the television station 20 to the consumer station 30. In the embodiment depicted in Figure 1, the storage traffic automation system 22 will play out its content to the multiplexer 28 and send commands to the multiplexer 28. The storage traffic automation system 22 also sends commands to the data stream server 24, also referred to as a broadcast data stream server (BDSS). The data stream server 24 receives information from the token registry 18 indicating the tokens that are to be associated with certain portions of the television content being played out of the storage traffic automation system 22. The data stream server 24 will generate, in one practice, data packets that can be integrated into the broadcast media stream that makes up the content being delivered from the storage traffic automation system 22 to the consumer station 30. To this end, the television station 20 shown in Figure 1 includes the multiplexer 28. The multiplexer 28 will multiplex packets generated by the data stream server 24, including a packet generator, with data packets received from the storage traffic automation system 22 so that all packets are delivered as a coherent stream of data to the consumer station 30 so that the consumer can view the broadcast content that will include with it tokens that are representative of the location of content that is being associated with portions of the broadcast media stream. As such, the system multiplexes token data with television data to generate an intermixed stream of data for the user site 30.

The consumer station 30 shown in Figure 1 couples via path 7 to the multiplexer 28 and via path 9 to the token registry 18. The consumer station 30 is meant to depict a consumer's home that has connections to the cable television network and a separate connection to a computer data network that couples to the computer 34. The television network and the computer network may use the same medium, such as a cable that connects from a cable head end to the consumer's home. However, the two networks are distinct in that the broadcast data over the television network is transmitted in a bandwidth and using a protocol that is different from the bandwidth and protocol used by the computer data network that couples to the computer 34. As such, although the computer 34 and the set top box 32 may use the same physical media for their network connections, these networks are separate and distinct and the system 10 depicted in Figure 1 links these separate and distinct networks by having the data stream server 24 insert a token into the content generated by the token creation tool 14, wherein the token logically links portions of the television broadcast content to content stored on the network coupled to and accessible by the computer 34.

The depicted set top box 32 can be any suitable set top box device that can receive and process data transmitted over the television broadcast network. Similarly, the depicted computer 34 can be any suitable computer for coupling to a computer data network. Typically, the computer 34 at the consumer station 30 is a conventional home computer with a connection through an internet service provider to the internet data network.

In operation, the content producer using the content production station 16 determines which segments or portions of the television broadcast to link to content stored on or generated by the computer data network that is accessible by computer 34. The content producer can also determine the actual content or site that they want logically linked to the selected segment of the television data. The content producer then may use the token creation tool 14 to register those decisions in the token registry 18. To this end, the token registry 18 receives token instructions as determined by the content producer 16. These token instructions indicate what content the token is to link to on the computer network, what broadcast content the token is associated with, how long the token is to last, what the visual icon will look like that informs the viewer of the linked computer content, where that icon will appear on the screen, and other information relevant to the type of logical link being created between the television content and the associated content on the computer data network.

The content producer also sends the content to the television station 20 in any file format the content producer wishes. The content is loaded into the storage traffic automation system 22 and the playout of that content is eventually scheduled and played by the television station's automation system 22. As depicted in Figure 1, the token registry 18 couples via path 4 to the data stream server 24. Prior to playout, the data stream server receives over path 4 the token instructions from the token registry. In some embodiments personnel or processes at the television station 20 initiate the transfer of token information from the token registry 18 to the data stream server 24 and may optionally associate the television station's internal identifiers with specific tokens in the registry. In one operation, the automation system 22 provides an instruction to the data stream server 24. That instruction directs that data stream server to insert a specific token or token playlist at a specific time into the MPEG-2 transport stream that is being transmitted from multiplexer 28 to the set top box 32 of the consumer 30. Upon receiving the trigger to insert the token data, the data stream server 24 collects the proper token and inserts that token into the meta data section of the MPEG-2 transport stream. To enable this process, the set of tokens to be inserted in the stream includes an identifier carrying data representative of at least one of a network location of the packet generator, a date for inserting the respective token into the stream, a time for inserting the respective token into the stream, and an application or script that the set top box can execute.

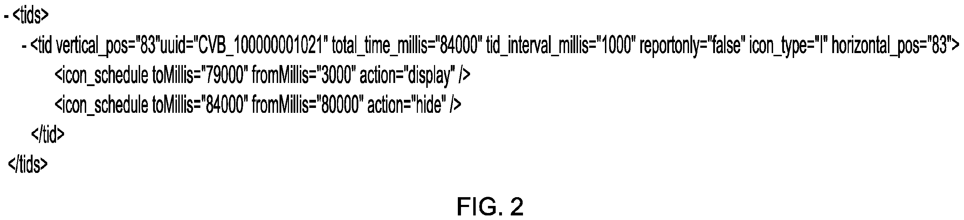

Figure 2 depicts one embodiment of a token suitable for insertion into the meta data stream. In particular, the token of Figure 2 will create a token MPEG-2 data stream that will include a token that uniquely identifies itself as CVB_100000001021. Further information in the token indicates that the token icon is of type "I" (info) and the icon is to be positioned on the screen at 83% of the screen on vertical and 83% of the screen on horizontal and should remain active for 84 seconds. This icon will display three seconds after the receipt of the token stream by the set top box 32 and be displayed for 76 seconds. Once inserted into the stream, the transport stream is delivered down to the set top box 32 and the set top box 32 may recognize the token data and display the visual cue (icon) that the token data instructs the set top box to present. Typically, the visual cue indicates that there is content that can be requested from the computer data network that is associated with the content being received over the set top box 32. In one operation, the consumer accesses this information by clicking on the remote control that they would like to activate the link to the content on the computer network. As described in U.S. Application Serial No. 12/001,663, the information associated with that token can be delivered to the consumer's computer station 34.

The storage traffic and automation system 22 depicted in Figure 1 is shown in this embodiment as a television station automation system. Such an automated system manages a playout list that includes that schedule of broadcast content that is being delivered across the television network to the set top box device 32. As such, it maintains the information about which video assets are to be played from moment to moment throughout the day and the automation system 22 calls each video asset from its input or storage source. The automation system 22 may schedule primary events such as a commercial or a show and secondary events such as a graphic overlay or a crawler. Alternatively, the automation system may control highly detailed events within a single television program, such as switching between a studio camera and a live field camera during a news broadcast. The data stream server 24 may be integrated with the automation system 22. In one embodiment, the data stream server 24 is coupled to the automation system 22 as shown in Figure 1. In this embodiment, the automation system 22 may alert the data stream server 24 when each video asset is about to be played and the data stream server 24 checks its database to see if any tokens are scheduled for that video asset. If there are scheduled tokens, the data stream server 24 synchronizes the playout of the tokens along with the automation system's playout of the video. In an alternative practice, users may enter token insertions as secondary events in the automation system playout list so a playout message for the secondary event will be sent from the automation system 22 to the data stream server 24 to trigger the token insertion.

Optionally, in an alternative embodiment, during the insertion process, the data stream server 24 may insert additional data that is representative of the identification of the data stream server 24, the date and time of the insertion, applications (e.g. EBIF) or scripts, or other data that may be used by downstream components of the system. In this way, the set top box receives token information representative of both the content on the data network associated with the broadcast content and other information such as that representative of the data stream server that delivered that content and token. In this example, geographic information is provided to the set top box 30 indicating the source of the token associated with the computer content. In a further optional embodiment, the action of the user to activate the link results in a return to the computer network of a request and this request may carry the token identification as well as the data stream server identification. This information may be returned to any suitable location, such as, for example, the token registry 18 depicted in Figure 1. The token registry 18 receives the token data and the data stream server identification and is able to close a feedback loop that allows the token registry 18 to recognize the data stream servers that have been sourcing the television content which has been linked by the users to associated computer data content. Additionally, the feedback loop can make sure that the content and token were properly synchronized and actually delivered to the consumer station 30. To this end, an optional feedback monitor may be used for reporting back to the content provider the successful insertion of token data and successful delivery of the token. Additionally and optionally, the system may time stamp the data packets carrying token data to the user site for marking portions of the television content with timing information. This allows for a closer review of the synchronized delivery of the token with the television content.

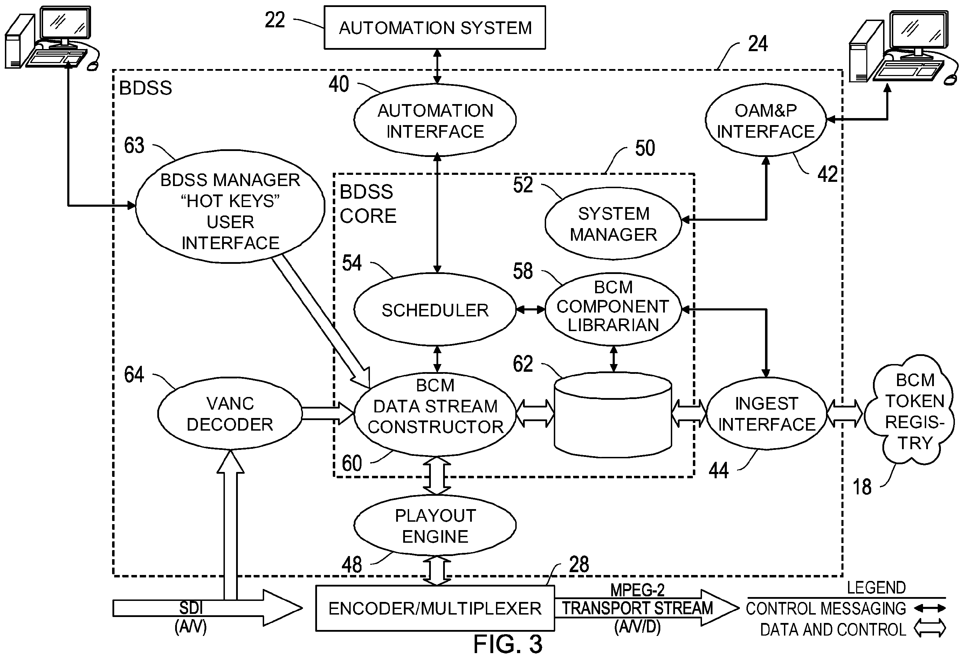

Turning to Figure 3, there is a depiction of one embodiment of a packet generator. In particular Figure 3 depicts in more detail the data stream server 24 of Figure 1 and illustrates the packet generator 50 that is a component of the data stream server 24. The packet generator 50 as shown in Figure 3 is an element of the data stream server and couples through an automation interface 40 with the automation system 22, and couples through an operation, administration and monitoring and provisioning interface (OAM&P) 42. Additionally, the packet generator communicates data and control messaging with an ingest interface 44 that exchanges data and control signals with the token registry 18.

The packet generator 50 receives triggering controls and scheduling data from the automation system 22 through the automation interface 40. The automation interface 40 is typically a software process that can execute the communication protocol employed by the automation system 22 and can broker data exchanges between the automation system 22 and the packet generator 50. Through this path the triggering and scheduling data passes to the scheduler 54 of the packet generator 50. The scheduler 54 interfaces with the data stream constructor and with the component librarian 58. The scheduler 54 is typically a software process that receives from the automation system 22 a trigger command for triggering the insertion of a specific token into the MPEG-2 transport stream. Additionally, the scheduler 54 may receive the from the automation system 22 data indicating the token to insert into the data stream and commands indicating whether the token is to be inserted periodically or to be inserted as a series of tokens having incrementing values. In either case, the scheduler 54 responds to the information received from the automation system 22 by requesting the component librarian 58 to select from the component library 62 the proper token to insert into the MPEG-2 transport stream. The library 62 may be a database system that stores tokens and may be periodically replenished by the ingest interface 44 that pulls data from the token registry 18, which in turn may be populated by sources such as the token creation tool 14 depicted in Figure 1, which is external to the system described herein, but that generate tokens for use by this system.

The data stream constructor 60 generates an MPEG-2 transport stream compatible data stream that is delivered to the playout engine 48. The playout engine 48 interfaces with the encoder/multiplexer 28 and delivers the stream thereto for mixing with the television data stream.

Alternative triggering systems are depicted in Figure 3 including a BDSS Manager user interface 63 to manually trigger tokens to be inserted and a VANC decoder 64 which may detect a pointer representative of a token. In either case, the Backchannel Media (BCM) data stream constructor 60 responds to the information received from the BDSS Manager (BDSSM) user interface 63 or the VANC decoder 64 by requesting the component librarian 58 to select from the component library 62 the proper token to insert into the MPEG-2 transport stream. Other optional triggering systems may be employed including storing pre-determined dates and times for token insertion in the BCM component librarian 58 and triggering the insertion to commence upon reaching the date and time specified, or from another data stream server located at a different point in the network such as a "hub" control television station, a national broadcast television station or a national content Syndicator, for example.

In some embodiments, the components of the BDSS of Figure 3 may be located in different parts of either the computer network or the television network. For instance, the encoder-multiplexer 28 may be located at a first television station in either the computer network or the television network, while the automation system 22 may be located at a second television station in either the computer network or the television network. In some embodiments, the automation system 22 may interact with more than one BDSS. Thus, in some embodiments, not every component shown in Figure 3 will be in the same physical location in either the computer network or the television network.

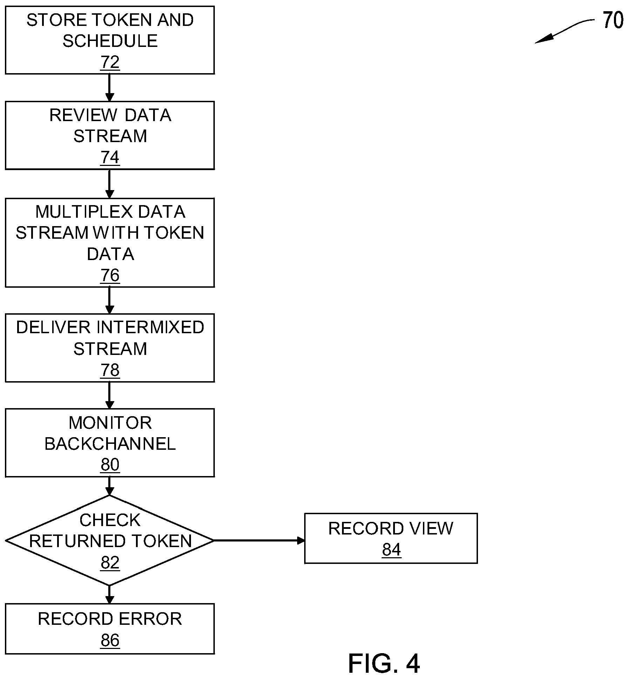

Figure 4 presents a flowchart diagram of one process for linking data transmitted over a broadcast media to data on a computer data network. In particular, Figure 4 presents a process 70 that includes a first step 72 wherein token data is stored in a database and a pointer representative of the token is stored in the program and the play list information is stored in a database as well. Typically the database is part of the storage traffic and automation system 22 depicted in Figure 1, but it may be a separate system and systems described herein do not rely on any particular process. Further, the database may be any suitable database system, including the commercially available Microsoft Access database, and can be a local or distributed database system. The design and development of suitable database systems are described in McGovern et al., A Guide To Sybase and SQL Server, Addison-Wesley (1993). The database may be supported by any suitable persistent data memory, such as a hard disk drive, RAID system, tape drive system, floppy diskette, or any other suitable system. The database may organize the token data and the play list data into tables that include fields and in any case the database stores the token that is to be inserted into the broadcast content, and information representative of when that broadcast content is expected to be played out and delivered as SDI to the encoder/multiplexer 28, as shown in Figure 3. To this end, the process 70, in step 74 reviews the raw SDI process stream or streams that are passing into the encoder/multiplexer 28 using a mechanism such as a VANC decoder 63 depicted in Figure 3.

The encoder/multiplexer 28 processes the SDI stream and packages the SDI stream into and MPEG-2 transport stream protocol. Optionally, a mechanism such as a VANC decoder 64 will monitor the SDI stream to detect pointers representative of tokens within the SDI stream to determine if a token is to be inserted into the MPEG-2 stream being generated. If such a pointer is detected a token is prepared for insertion into the MPEG-stream being generated. The data stream constructor 60 may request from the token registry 46 the token to be inserted to the MPEG-2 transport stream. Alternatively and optionally, the data stream constructor 60 may respond to commands from the scheduler 54 rather than from pointers detected in the SDI stream by the VANC decoder 64. In this practice the process 70 is driven by the play list stored in the database during step 72. At times noted in the table of the play out list, the scheduler 54 may direct the data stream constructor 60 to collect a specific token from the token registry 46. In either practice, the data stream constructor 60 receives a token and constructs a data stream that is delivered by the play out engine 48 to the data stream constructor 60 and mixed into the SDI data and encoded into the MPEG-2 transport stream in step 76.

In one particular practice, the data stream constructor builds a data stream that the encoder/multiplexer will encode into the program map table of the MPEG-2 transport stream. Once delivered to the MPEG-2 transport stream, the process 70 monitors the back channel of the broadcast data network, as shown by step 80. The process listens for a token that is being returned by a user on the broadcast data network. If a token is detected, the process 70 checks the token against the expected token. In one practice, the process 70 in step 80 checks if the received token matches the content that was being presented to the user at the time the token was detected. If the token check at step 82 indicates that the correct token was returned, then the process 70 proceeds to step 84 and records that the proper token was viewed by the user and returned. If the token is incorrect, the process 70 at step 86 records an error.

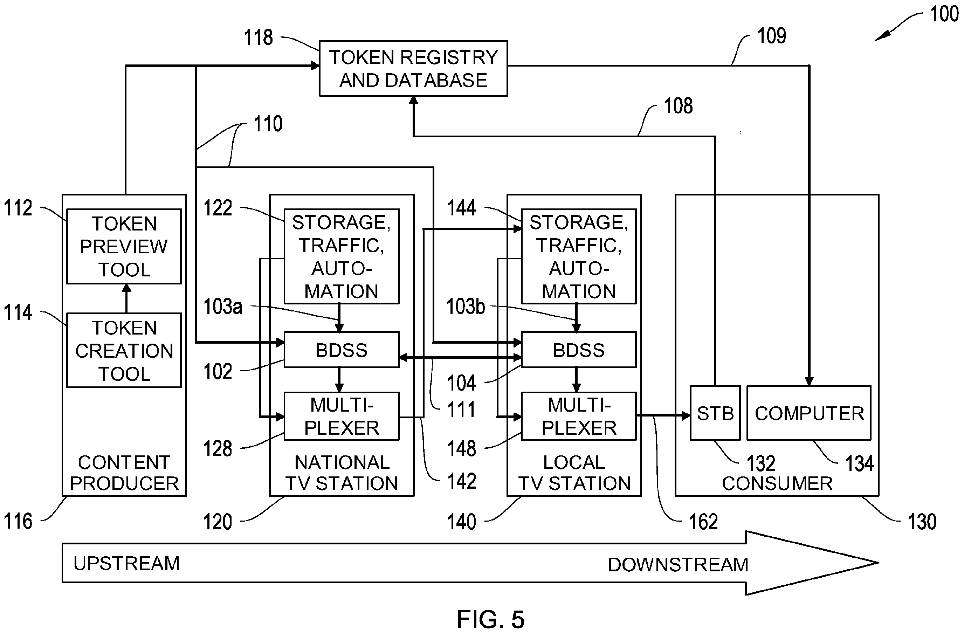

In some embodiments, a plurality of broadcast data stream servers 102, 104 may be employed in different parts of the content distribution network, as shown in Figure 5. The servers may be located at a broadcast television station, such as national broadcast station 120, or local broadcast station 140. Alternatively, or additionally, the servers 102, 104 may be located at the user site 130, e.g., within set top box 132 or computer 134, at a cable television station (not shown in Figure 5), a cable system headend (not shown in Figure 5), a local hub TV station (not shown in Figure 5), a national content Syndicator (not shown in Figure 5) or other locations where television content streams are assembled. Each of the data stream servers 102, 104 may be in communication with one another, e.g., via link 111 or via links with the token registry 110, and therefore, may together form a network of data stream servers. In one embodiment, one or more data stream servers, e.g., data stream server 102, may be located at a national broadcast television station 120, while one or more data stream servers, e.g., data stream server 104, may be located at a local broadcast television station 140. The server 104 at the local broadcast television station 140 may be in communication with the server 102 at the national broadcast television station 120. This communication may also take place via a cable communication channel, a network communications interface 109, 110, or 111, or a backchannel communications path 108. Each of the servers 102, 104 may be in communication (via link 110) with the token registry 118 and one or more databases that are associated with it, and carry information relating to the tokens. In addition, each of the servers 102, 104 may interact with automation systems, and multi-plexers (as shown in Figure 5) that interact with the servers 102, 104 to generate packets to be broadcast via the television network. In addition, the servers 102, 104 may include BCM data stream constructors (not shown in Figure 5).

As illustrated by the example in Figure 5 the network of servers 102, 104 could be used by both the national and local broadcasters to insert packets of broadcast data and/or token data into an MPEG-2 transport stream 142, 162. The BDSS server 102 at the national TV station 120 may insert tokens into the national broadcast stream 142 when triggered by a variety of events such as by a live operator, upon detecting triggers in the SDI stream, upon reaching a pre-specified date and time, or in response to commands from the Storage/Traffic/Automation system 122. Once the national broadcast stream 142 has been constructed and encoded into an MPEG-2 transport stream, it may be received by the storage, traffic and automation system 143 within local broadcast station 140. The local broadcast station data stream server 104, in conjunction with encoder/multiplexer 148, may process the incoming broadcast stream to generate an outgoing MPEG-2 transport stream 162 which may be received by the Consumer STB 132.

Alternatively and optionally, the data stream constructor within the data stream server 104 may respond to commands from a scheduler as described in relation to Figures 3 and 4, or at least in part on information received from the national broadcast station data stream server 102. The sequence and schedule of a plurality of token insertions performed by the national data stream server 102 in response to a plurality of triggers at the national TV station can be recorded and stored into the database as a new token playlist which can be executed in response to a single trigger. In this manner the national data stream server 102 responds to a number of triggers available within the national TV station 120, insert the required tokens into the broadcast stream 142, and store the new consolidated token playlist in the database. The local TV station data stream server 104 can retrieve the new consolidated playlist and re-insert the tokens inserted by the data stream server 102 at the national TV station 120 in response to a single trigger when the plurality of national TV station triggers are not available at the local TV station. This practice is used in the event that the tokens inserted at a national TV station are removed from the broadcast stream 142 prior to reaching the Consumer STB 132 within the local broadcast stream 162, such as when a local TV station transforms the national TV broadcast stream 142 from MPEG-2 into a different format before creating the final broadcast stream 162 destined for the Consumer STB 132.

As discussed above, the broadcast data stream server or BDSS may be realized as a hardware component. Additionally, or alternatively, the BDSS may be realized as a software component operating on a conventional data processing system such as a Unix workstation. In that embodiment, the data stream server may be implemented as a C language computer program, or a computer program written in any high level language including C++, Fortran, Java or basic.

Additionally, in an embodiment where microcontrollers or DSPs are employed, the data stream server may be realized as a computer program written in microcode or written in a high level language and compiled down to microcode that can be executed on the platform employed. The development of such systems is known to those of skill in the art, and such techniques are set forth in Digital Signal Processing Applications with the TMS320 Family, Volumes I, II, and III, Texas Instruments (1990). Additionally, general techniques for high level programming are known, and set forth in, for example, Stephen G. Kochan, Programming in C, Hayden Publishing (1983). Developing code for the DSP and microcontroller systems follows from principles well known in the art.

Those skilled in the art will know or be able to ascertain using no more than routine experimentation, many equivalents to the embodiments and practices described herein. Accordingly, it will be understood that the scope of the invention is defined by the appended claims.

## Claims

1. A system for providing tokens for re-insertion within a television network, said system comprising:
a first TV station comprising
a database (118) configured to communicate with a first data stream server (102), said database further configured to store, as a token playlist, a sequence and schedule of a plurality of token insertions into a television data stream within a television network, the insertions performed by the first data stream server (102) being part of the first TV station in response to a plurality of triggers;
wherein the token playlist can be executed in response to a single trigger; and
a second TV station comprising:
a receiver configured to receive said television data stream from the first TV station;
a second data stream server (104) configured to communicate with said database (118), said second data stream server further configured to:
retrieve from said database (118) said token playlist; and, cause said tokens to be re-inserted in said television data stream in response to a single trigger, if the tokens inserted at the first TV station have been removed from said television data stream, wherein, re-inserting the token comprises insertion of said tokens into said television data stream for broadcast to a plurality of set top boxes (132) within said television network, wherein the tokens are representative of links between television content in said television data stream and the content stored on a computer network
wherein said second data stream server comprises a packet generator (50) for generating packets for broadcast over said television network to a plurality of set top boxes, wherein said packets comprise token data associated with said tokens inserted by the packet generator into said packets, and wherein the packet generator (50) is configured to provide said packets for insertion into a private data section or packetized elementary stream associated with one or more programs of a transport stream and being representative of television content broadcast over said television network.

2. The system of claim 1, further comprising a multiplexer (28) coupled to the packet generator (50) for multiplexing said packets comprising said token data with television content for broadcast to said plurality of set top boxes over the television distribution network.

3. The system according to any preceding claim, further comprising a time stamp for stamping data packets carrying token data to mark portions of television content with timing information.

4. The system of any preceding claim, further comprising said plurality of set top boxes configured to receive said broadcast television data stream.

5. The system of any preceding claim, further comprising said first data stream server (102), wherein said first data stream server is located upstream of said second data stream server in said television distribution network.

6. A method for providing tokens for re-insertion within a television network, said method comprising:
storing, in a database (118), comprised in a first TV station configured to communicate with a first data stream server (102), as a new token playlist, a sequence and schedule of a plurality of token insertions into a television data stream within a television network, the insertions performed by the first data stream server (102) being part of the first TV station in response to a plurality of triggers;
wherein the new token playlist can be executed in response to a single trigger
receive, at a second TV station, said television data stream from the first TV station
retrieving, by a second data stream server (104), being part of the second TV station and configured to communicate with said database (118), said token playlist;
and
in response to the retrieve of said token playlist, causing by said second data stream server (104) said tokens to be re-inserted in said television data stream, in response to a single trigger, within said television distribution network, if the tokens inserted at the first TV station have been removed from said television data stream, said reinsertion comprising insertion of said token into said television data stream for broadcast to a plurality of set top boxes (132) within said television network, wherein the tokens are representative of links between television content in said television data stream and the content stored on a computer network;
wherein said second data stream server comprises a packet generator for generating packets for broadcast over said television network to a plurality of set top boxes, wherein said packets comprise token data associated with said tokens inserted by the packet generator into said packets, and wherein the packet generator provides said packets for insertion into a private data section or packetized elementary stream associated with one or more programs of a transport stream and being representative of television content broadcast over said television network.

7. The method of claim 6, further comprising causing by said first data stream server (102) said token to be inserted into said television data stream within said television distribution network, wherein said first data stream server is located upstream of said second data stream server (104) in said television distribution network.

## Patentansprüche

1. System zum Bereitstellen von Tokens zum Wiedereinschieben innerhalb eines Fernsehnetzwerks, wobei das System umfasst:
eine erste Fernsehstation, umfassend
eine Datenbank (118), die eingerichtet ist, um mit einem ersten Datenstromserver (102) zu kommunizieren, wobei die Datenbank weiter eingerichtet ist, um eine Sequenz und einen Zeitplan einer Vielzahl von Token-Einschüben in einen Fernsehdatenstrom innerhalb eines Fernsehnetzwerks als eine Token-Wiedergabeliste zu speichern, wobei die Einschübe in Reaktion auf eine Vielzahl von Auslösern von dem ersten Datenstromserver (102) durchgeführt werden, der Teil der ersten Fernsehstation ist;
wobei die Token-Wiedergabeliste in Reaktion auf einen einzelnen Auslöser ausgeführt werden kann; und
eine zweite Fernsehstation, umfassend:
einen Empfänger, der eingerichtet ist, um den Fernsehdatenstrom von der ersten Fernsehstation zu empfangen;
einen zweiten Datenstromserver (104), der eingerichtet ist, um mit der Datenbank (118) zu kommunizieren, wobei der zweite Datenstromserver weiter eingerichtet ist, um:
die Token-Wiedergabeliste von der Datenbank (118) zu beziehen; und zu bewirken, dass die Tokens in Reaktion auf einen einzelnen Auslöser in den Fernsehdatenstrom wieder eingeschoben werden, wenn die an der ersten Fernsehstation eingeschobenen Tokens aus dem Fernsehdatenstrom entfernt wurden, wobei das Wiedereinschieben des Tokens ein Einschieben der Tokens in den Fernsehdatenstrom zur Ausstrahlung an eine Vielzahl von Set-Top-Boxen (132) innerhalb des Fernsehnetzwerks umfasst, wobei die Tokens Verbindungen zwischen Fernsehinhalt in dem Fernsehdatenstrom und dem auf einem Computernetzwerk gespeicherten Inhalt darstellen,
wobei der zweite Datenstromserver einen Paketgenerator (50) zum Generieren von Pakten zur Ausstrahlung über das Fernsehnetzwerk an eine Vielzahl von Set-Top-Boxen umfasst,
wobei die Pakete Token-Daten umfassen, die den von dem Paketgenerator in die Pakete eingeschobenen Tokens zugeordnet sind, und wobei der Paketgenerator (50) eingerichtet ist, um die Pakete zum Einschieben in einen privaten Datenabschnitt oder gepackten Elementarstrom bereitzustellen, der einem oder mehreren Programmen eines Transportstroms zugeordnet ist und Fernsehinhalt darstellt, der über das Netzwerk ausgestrahlt wird.

2. System nach Anspruch 1, weiter umfassend einen Multiplexer (28), der mit dem Paketgenerator (50) gekoppelt ist, um die Pakete zu multiplexen, die die Token-Daten mit Fernsehinhalt zum Ausstrahlen an die Vielzahl von Set-Top-Boxen über das Fernsehverteilnetzwerk umfassen.

3. System nach einem der vorstehenden Ansprüche, weiter umfassend einen Zeitstempel zum Stempeln von Token-Daten tragenden Datenpaketen, um Bereiche von Fernsehinhalt mit Zeitinformationen zu markieren.

4. System nach einem der vorstehenden Ansprüche, weiter umfassend die Vielzahl von Set-Top-Boxen, die eingerichtet sind, um den ausgestrahlten Fernsehdatenstrom zu empfangen.

5. System nach einem der vorstehenden Ansprüche, weiter umfassend den ersten Datenstromserver (102), wobei der erste Datenstromserver sich stromabwärts des zweiten Datenstromservers in dem Fernsehverteilnetzwerk befindet.

6. Verfahren zum Bereitstellen von Tokens zum Wiedereinschieben innerhalb eines Fernsehnetzwerks, wobei das Verfahren umfasst:
Speichern einer Sequenz und eines Zeitplans einer Vielzahl von Token-Einschüben in einen Fernsehdatenstrom innerhalb eines Fernsehnetzwerks als eine neue Token-Wiedergabeliste in einer Datenbank (118), die in einer ersten Fernsehstation umfasst ist, die eingerichtet ist, um mit einem ersten Datenstromserver (102) zu kommunizieren, wobei die Einschübe in Reaktion auf eine Vielzahl von Auslösern von dem ersten Datenstromserver (102) durchgeführt werden, der Teil der ersten Fernsehstation ist;
wobei die neue Token-Wiedergabeliste in Reaktion auf einen einzelnen Auslöser ausgeführt werden kann; und
Empfangen des Fernsehdatenstroms von der ersten Fernsehstation an einer zweiten Fernsehstation;
Beziehen der Token-Wiedergabeliste durch einen zweiten Datenstromserver (104), der Teil der zweiten Fernsehstation und eingerichtet ist, um mit der Datenbank (118) zu kommunizieren; und
Bewirken, durch den zweiten Datenstromserver (104), in Reaktion auf das Beziehen der Token-Wiedergabeliste, dass die Tokens in Reaktion auf einen einzelnen Auslöser innerhalb des Fernsehverteilsystems in den Fernsehdatenstrom wieder eingeschoben werden, wenn die an der ersten Fernsehstation eingeschobenen Tokens aus dem Fernsehdatenstrom entfernt wurden, wobei das Wiedereinschieben ein Einschieben der Tokens in den Fernsehdatenstrom zur Ausstrahlung an eine Vielzahl von Set-Top-Boxen (132) innerhalb des Fernsehnetzwerks umfasst, wobei die Tokens Verbindungen zwischen Fernsehinhalt in dem Fernsehdatenstrom und dem auf einem Computernetzwerk gespeicherten Inhalt darstellen;
wobei der zweite Datenstromserver einen Paketgenerator zum Generieren von Pakten zur Ausstrahlung über das Fernsehnetzwerk an eine Vielzahl von Set-Top-Boxen umfasst,
wobei die Pakete Token-Daten umfassen, die den von dem Paketgenerator in die Pakete eingeschobenen Tokens zugeordnet sind, und wobei der Paketgenerator die Pakete zum Einschieben in einen privaten Datenabschnitt oder gepackten Elementarstrom bereitstellt, der einem oder mehreren Programmen eines Transportstroms zugeordnet ist und Fernsehinhalt darstellt, der über das Netzwerk ausgestrahlt wird.

7. Verfahren nach Anspruch 6, weiter umfassend Bewirken, durch den ersten Datenstromserver (102), dass der Token in den Fernsehdatenstrom innerhalb des Fernsehverteilnetzwerks eingeschoben wird, wobei der erste Datenstromserver sich stromabwärts des zweiten Datenstromservers (104) in dem Fernsehverteilnetzwerk befindet.

## Revendications

1. Système de fourniture de jetons pour une réinsertion dans un réseau de télévision, ledit système comprenant :
une première station de télévision comprenant
une base de données (118) configurée pour communiquer avec un premier serveur de flux de données (102), ladite base de données étant configurée en outre pour stocker, comme une liste de lecture de jetons, une séquence et une planification d'une pluralité d'insertions de jeton dans un flux de données de télévision dans un réseau de télévision, les insertions effectuées par le premier serveur de flux de données (102) faisant partie de la première station de télévision en réponse à une pluralité de déclencheurs ;
dans lequel la liste de lecture de jetons peut être exécutée en réponse à un unique déclencheur ; et
une deuxième station de télévision comprenant :
un récepteur configuré pour recevoir ledit flux de données de télévision à partir de la première station de télévision ;
un deuxième serveur de flux de données (104) configuré pour communiquer avec ladite base de données (118), ledit deuxième serveur de flux de données étant configuré en outre pour :
récupérer à partir de ladite base de données (118) ladite liste de lecture de jetons ; et amener lesdits jetons à être réinsérés dans ledit flux de données de télévision en réponse à un unique déclencheur, si les jetons insérés au niveau de la première station de télévision ont été éliminés dudit flux de données de télévision, dans lequel la réinsertion du jeton comprend l'insertion desdits jetons dans ledit flux de données de télévision pour la diffusion à une pluralité de boîtiers décodeurs (132) dans ledit réseau de télévision, dans lequel les jetons sont représentatifs de liens entre un contenu de télévision dans ledit flux de données de télévision et le contenu stocké sur un réseau informatique
dans lequel ledit deuxième serveur de flux de données comprend un générateur de paquets (50) pour générer des paquets pour la diffusion sur ledit réseau de télévision à une pluralité de boîtiers décodeurs, dans lequel lesdits paquets comprennent des données de jeton associées auxdits jetons insérés par le générateur de paquets dans lesdits paquets, et dans lequel le générateur de paquets (50) est configuré pour fournir lesdits paquets pour l'insertion dans une section de données privées ou un flux élémentaire en paquets associé à un ou plusieurs programmes d'un flux de transport et étant représentatifs d'un contenu de télévision diffusé sur ledit réseau de télévision.

2. Système selon la revendication 1, comprenant en outre un multiplexeur (28) couplé au générateur de paquets (50) pour multiplexer lesdits paquets comprenant lesdites données de jeton avec un contenu de télévision pour la diffusion à ladite pluralité de boîtiers décodeurs sur le réseau de distribution de télévision.

3. Système selon une quelconque revendication précédente, comprenant en outre une estampille temporelle pour estampiller des paquets de données transportant des données de jeton pour marquer des portions de contenu de télévision avec des informations de synchronisation.

4. Système selon une quelconque revendication précédente, comprenant en outre ladite pluralité de boîtiers décodeurs configurés pour recevoir ledit flux de données de télévision diffusé.

5. Système selon une quelconque revendication précédente, comprenant en outre ledit premier serveur de flux de données (102), dans lequel ledit premier serveur de flux de données est situé en amont dudit deuxième serveur de flux de données dans ledit réseau de distribution de télévision.

6. Procédé de fourniture de jetons pour une réinsertion dans un réseau de télévision, ledit procédé comprenant :
le stockage, dans une base de données (118), comprise dans une première station de télévision configurée pour communiquer avec un premier serveur de flux de données (102), comme une nouvelle liste de lecture de jetons, une séquence et une planification d'une pluralité d'insertions de jeton dans un flux de données de télévision dans un réseau de télévision, les insertions effectuées par le premier serveur de flux de données (102) faisant partie de la première station de télévision en réponse à une pluralité de déclencheurs ;
dans lequel la nouvelle liste de lecture de jetons peut être exécutée en réponse à un unique déclencheur
la réception, au niveau d'une deuxième station de télévision, dudit flux de données de télévision à partir de la première station de télévision
la récupération, par un deuxième serveur de flux de données (104) faisant partie de la seconde station de télévision et configuré pour communiquer avec ladite base de données (118), de ladite liste de lecture de jetons ; et
en réponse à la récupération de ladite liste de lecture de jetons, le fait d'amener par ledit deuxième serveur de flux de données (104) lesdits jetons à être réinsérés dans ledit flux de données de télévision, en réponse à un unique déclencheur, dans ledit réseau de distribution de télévision, si les jetons insérés au niveau de la première station de télévision ont été éliminés dudit flux de données de télévision, ladite réinsertion comprenant l'insertion dudit jeton dans ledit flux de données de télévision pour la diffusion à une pluralité de boîtiers décodeurs (132) dans ledit réseau de télévision, dans lequel les jetons sont représentatifs de liens entre un contenu de télévision dans ledit flux de données de télévision et le contenu stocké sur un réseau informatique ;
dans lequel ledit deuxième serveur de flux de données comprend un générateur de paquets pour générer des paquets pour la diffusion sur ledit réseau de télévision à une pluralité de boîtiers décodeurs, dans lequel lesdits paquets comprennent des données de jeton associées auxdits jetons insérés par le générateur de paquets dans lesdits paquets, et dans lequel le générateur de paquets fournit lesdits paquets pour l'insertion dans une section de données privées ou un flux élémentaire en paquets associé à un ou plusieurs programmes d'un flux de transport et étant représentatifs d'un contenu de télévision diffusé sur ledit réseau de télévision.

7. Procédé selon la revendication 6, comprenant en outre le fait d'amener par ledit premier serveur de flux de données (102) ledit jeton à être inséré dans ledit flux de données de télévision dans ledit réseau de distribution de télévision, dans lequel ledit premier serveur de flux de données est situé en amont dudit deuxième serveur de flux de données (104) dans ledit réseau de distribution de télévision.
